# EUROPEAN PATENT SPECIFICATION

(11) **EP 2 564 552 B1**
(45) Date of publication and mention of the grant of the patent: **11.04.2018**
(21) Application number: 10716839.5
(22) Date of filing: 30.04.2010
(51) Int. Cl.: H04L 12/24

(54) **NETWORK MANAGEMENT IN A COMMUNICATIONS NETWORK**
NETZWERKVERWALTUNG IN EINEM KOMMUNKATIONSNETZ
GESTION DE RÉSEAU DANS UN RÉSEAU DE COMMUNICATION

(43) Date of publication of application: 06.03.2013
(73) Proprietor: Telefonaktiebolaget LM Ericsson (publ), 164 83 Stockholm (SE)
(72) Inventor: KRCO, Srdjan, Dublin D16 (IE); MEIROSU, Catalin, S-112 26 Stockholm (SE)
(74) Representative: Zacco Sweden AB
(86) International application number: PCT/EP2010/055898
(87) International publication number: WO 2011/134526

(56) References cited:
- US-A1- 2008 049 644
- US-A1- 2009 119 280
- US-A1- 2009 235 174
- AHMED A ET AL: "Performance of Mobile Agent Based Network Topology Discovery" ELECTRICAL AND COMPUTER ENGINEERING, 2007. CCECE 2007. CANADIAN CONFER ENCE ON, IEEE, PI, 1 April 2007 (2007-04-01), pages 66-69, XP031176468 ISBN: 978-1-4244-1020-0
- HUI TIAN ET AL: "Mobile agents based topology discovery algorithms and modelling" PARALLEL ARCHITECTURES, ALGORITHMS AND NETWORKS, 2004. PROCEEDINGS. 7T H INTERNATIONAL SYMPOSIUM ON HONG KONG MAY 10-12, 2004, PISCATAWAY, NJ, USA,IEEE, 10 May 2004 (2004-05-10), pages 502-507, XP010706512 ISBN: 978-0-7695-2135-0

## Description

The research leading to these results has received funding from the European Community's Seventh Framework Programme (FP7/2007-2013) under grant agreement no. 216041

### Technical Field

The invention relates to network management in a communications network, and in particular to a method and an apparatus for discovering a node in a communications network.

### Background

Future generations of communications networks might comprise up to many millions of short-range access devices deployed close to the end user in the home or business premises. Such access devices might be part of the communications network itself and would aim to improve data rates for providing communications services to end user devices. The deployment of such a large number of access devices would increase the complexity of the network topology which could have a consequential effect of increasing the operational expenditure for network operators. The efficient management of such future generations of communications network is thought to be a significant aspect of their successful implementation and operation. This is because the deployment of such a large number of access devices close to the end user might require a large operational expenditure for human operators to manually configure the communications network.

With existing communications networks it is known to determine a network topology with the assistance of a network manager apparatus which may be a server with a global view of the network, and which is operated with network manager software. The nodes of the network may periodically broadcast network management information which is received by the network manager apparatus to build a database of the network topology so that the nodes are accepted or subscribed to the network. With Internet Protocol (IP) networks it is known to provide a discovery technique whereby newly deployed nodes broadcast network management information which is received by nodes already in the network. Another approach is to allow each node to form its own view about the network topology by broadcasting network management information from each node in the network and allowing them to receive information from neighbouring nodes. Such techniques allow some degree of self-management or self-configuration of the network, and aim to allow full or partial automation so that management functions such as configuration, maintenance, and re-configuration in the event of a change in the network can be completed with a reduced requirement to involve human operators.

It is also known from US2009/0119280A1 to provide a private Local Area Network (LAN) that is self-managing or self-configuring. The LAN includes a centralised network management function which comprises a manager apparatus capable of deploying a LAN crawler. The manager apparatus must be told about the devices in the LAN by a human operator who must then calculate a predefined path for the crawler to follow so that all devices specified by the operator are visited by the crawler. Such a crawler may be used when the LAN is commissioned for the first time, or when there has been a change in the LAN such as a new or amended physical connection.

The above described arrangements all have problems associated with network management and determining a network topology. These problems can be summarised as not providing a sufficiently automated discovery of newly deployed nodes by nodes already in the network, and the discovery of neighbouring nodes by the newly deployed nodes. The techniques described above may require nodes of the network to be told to broadcast network management information by a human operator. The private LAN arrangement using a crawler described above requires the devices in the LAN to be programmed into the manager apparatus and a predefined path for the crawler to follow must be calculated by a human operator. The predefined path for the crawler must include the newly deployed nodes which requires human operator involvement. These problems may be made worse in the case of a future generation of communications network comprising up to many millions of access devices, which might include a relatively high rate of change of nodes joining or leaving the network. Overall these problems limit the possibility to obtain a substantially fully automated network management function which requires a reduced human operator involvement.

Further problems with using a crawler in the private LAN described above include the use of a centralised database storing the topology to be traversed by the crawler which introduces a single point of failure into the system. This arrangement also requires a relatively large amount of processing resources on the manager apparatus. Furthermore, the transfer of all information about a particular device on the LAN to the manager apparatus at the central location regardless of whether new information about the particular device exists creates significant and unnecessary traffic, which further consumes resources unnecessarily. US 2008/049644 discloses a virtualization mechanism that may create a virtual representation of a group of physical computers and the physical connections between the computers. The mechanism may comprise a discovery tool for determining a topology of connected physical computers. US 2009/235174 discloses a network device identification process and system where a centralized global master is coupled to multiple local masters that locally retain a portion of the data from the global master, and that coordinate the dynamic performance of discovery and identification processes within the domains assigned to those local masters.

### Summary

It is desirable to provide a way of readily determining nodes in a communications network, and to reduce at least some of the above-mentioned problems.

According to a first aspect of the invention, there is provided a method of discovering a node in a communications network for network management. The method including deploying a first crawler program in the network, the first crawler program encountering a first node of the network. The method including collecting network management information from the first node using the first crawler program. The method comprises determining an identity of a second node in communication with the first node from the network management information using the first crawler program. The method further includes deploying a second crawler program in the network, wherein the first crawler program and the second crawler program are configured to exchange information if they encounter each other in the network, said information relating to at least one node that has been previously visited by one of the crawler programs.

Such a method permits the first node to substantially automatically discover the second node which is in communication with it. This avoids the need for a predetermined path for the crawler program to follow to be calculated by a human operator. Using the crawler program in this manner provides the advantage of avoiding or reducing the need for human operator involvement when there has been a change in the communications network such as the addition of a new node. The method changes the approach to configuring the communications network, whereby the crawler program moves to nodes of the network in a substantially automated manner. Overall the method provides a greatly improved way for discovering nodes in the communications network by reducing manual intervention to manage the network. Accordingly, the method provides significant advantages for reducing operational expenditure for the management of communication networks with up to many millions of access device close to the end user.

According to a second aspect of the invention there is provided a network manager apparatus for discovering a node in a communications network. The network manager apparatus having a processor adapted to deploy a first crawler program in the network, the first crawler program for encountering a first node of the network. The processor adapted to collect network management information from the first node using the crawler program. The processor adapted to determine an identity of a second node in communication with the first node from the network management information using the first crawler program. The processor is further adapted to deploy a second crawler program in the network, wherein the first crawler program and the second crawler program are configured to exchange information if they encounter each other in the network, said information relating to at least one node that has been previously visited by one of the crawler programs.

According to a third aspect of the invention there is provided a computer program product operable to control a network manager apparatus for discovering a node in a communications network. The network manager apparatus having a processor adapted to deploy a first crawler program in the network, the first crawler program for encountering a first node of the network. The processor adapted to collect network management information from the first node using the crawler program. The processor adapted to determine an identity of a second node in communication with the first node from the network management information using the first crawler program. The processor is further adapted to deploy a second crawler program in the network, wherein the first crawler program and the second crawler program are configured to exchange information if they encounter each other in the network, said information relating to at least one node that has been previously visited by one of the crawler programs.

Further features of the invention are as claimed in the dependent claims.

### Brief Description of the Drawings

Features of the invention will be apparent from the following description of preferred embodiments shown by way of example only with reference to the accompanying drawings, in which;
**Figure 1** shows a diagram of a communications network for describing embodiments of the invention;
**Figure 2** shows a diagram of modules for a network manager apparatus shown in Figure 1 according to an embodiment of the invention;
**Figure 3** shows a flow diagram illustrating a method according to an embodiment of the invention; and
**Figure 4** shows a flow diagram illustrating a method according to an embodiment of the invention.

### Detailed Description

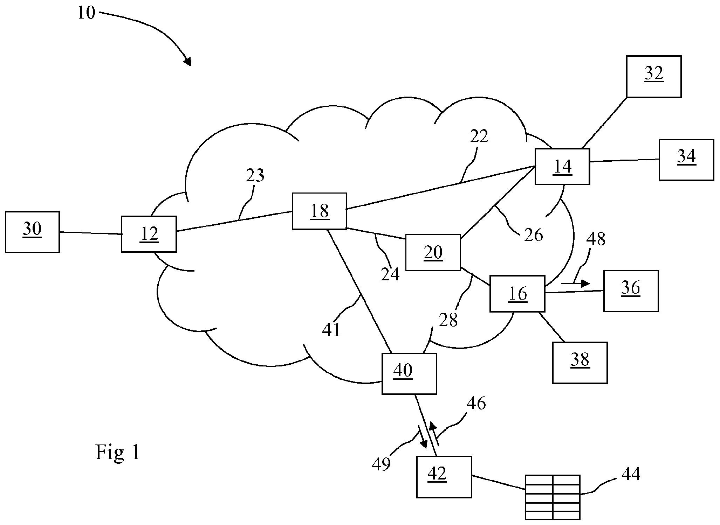

Figure 1 shows a diagram of a communications network used as a reference network to describe embodiments of the invention, generally designated 10. In Figure 1 the communications network 10, which may be alternatively known as a domain, has three provider edge nodes 12, 14, 16. Also shown are two intermediate nodes 18, 20 connecting the provider edge nodes 12, 14, 16 to each another. The intermediate node 18 is connected to the provider edge node 14 with a link 22 and to the provider edge node 12 with a link 23. The intermediate nodes 18, 20 are connected to each other with a link 24. The intermediate node 20 is connected to the provider edge node 14 with a link 26. The intermediate node 20 is connected to the provider edge node 16 with a link 28. The provider edge node 12 is in communication with a customer node 30. The provider edge node 14 is in communication with a customer node 32 and a customer node 34. The provider edge node 16 is in communication with a customer node 36 and a customer node 38.

The network 10 also has an access node 40 which is in communication with the intermediate node 18 with a link 41. The access node 40 is in communication with a network manager apparatus 42 which has a database 44 showing the topology of the network 10. The database 44 is a memory device that stores the topology in the form of network management information. It will be appreciated that the three provider edge nodes 12, 14, 16 and the access node 40 are all network access nodes for the network 10. Additionally the customer nodes 30, 32, 34, 36, 38 may also be termed access nodes for the network 10. The nodes 12, 14, 16, 18, 20, 30, 32, 34, 36, 38, 40 may alternatively be known as Network Elements (NEs). It will be appreciated that the paths between each provider edge device 12, 14, 16 and either the intermediate nodes 18, 20 and the access node 40 may cross many additional network devices such as nodes of the network, which have been omitted for the purposes of clarity.

The network 10 is controlled by the network manager apparatus 42, which is a server or node having network control software, and which is programmed to perform the functions according to the embodiments described herein. The network manager apparatus 42 has a global view of the network and is operable to determine the topology of the network 10 and store it in the database 44 which may be a table listing the nodes 12, 14, 16, 18, 20, 30, 32, 34, 36, 38, 40 of the network 10 and connections between them. The database 44 shows the topology of the network 10 in terms of links between nodes 12, 14, 16, 18, 20, 30, 32, 34, 36, 38, 40 and paths within those links. The database 44 may also contain other network management information related to performance management, or Quality of Service (QOS), or other optimisation of the links 23, 22, 24, 26, 28, 41 or the nodes 12, 14, 16, 18, 22, 30, 32, 34, 36, 38, 40 of the network 10 using a particular network management language defined by a standardization body. The network manager apparatus 42 may be under the control of a network operator or other third party.

For the purposes of describing embodiments of the invention it will be assumed that the customer node 36 is a new node that has been added to the network 10 by a user. This may be done, for example, by the user simply plugging in the customer node 36 to an available communications connection in the home or business premises. In one embodiment the network manager apparatus 42 periodically sends a crawler program 46 into the network 10 to look for new nodes such as the customer node 36. The crawler program 46 encounters the first node 40 and queries the database 44 to determine if the network manager apparatus 42 knows all of the network management information about the first node 40 by sending at least one data packet 49 to the network manager apparatus 42. The crawler program 46 also determines a hyperlink from the first node 40 which is a link pointing to a second node in communication with the first node 40. The second node may be any of the nodes 12, 14, 16, 18, 30, 32, 34, 36, 38. Accordingly the second node might be immediately adjacent to the first node 40 such as node 18, or it might be further away from the first node 40 such as any of the nodes 12, 14, 16, 30, 32, 34, 36, 38. The crawler program then moves to the second node by following the hyperlink. In this manner the crawler program 46 will eventually send network management information about all of the nodes 12, 14, 16, 18, 20, 30, 32, 34, 36, 38 back to the network manager apparatus 42 in the form of data packets 49.

In another embodiment, after the user has plugged the customer node 36 into an available communications connection in the home or business premises the provider edge node 16 recognises a change in the available links. In response to the change the edge node 16 initiates sending a crawler program towards the customer node 36 as shown at 48. The crawler program 48 then sends at least one data packet 49 to the network manager apparatus 42 relating to the network management information about the customer node 36. This arrangement has the advantage that the provider edge node 16 is a trusted node that is already part of the network 10 or domain, and it could impose a series of checks on the customer node 36 before formally including it within the network 10. The crawler program 48 then determines a hyperlink from the customer node 36 which points towards a second node in communication with the customer node 36. The second node may be any of the nodes 12, 14, 18, 20, 30, 32, 34, 38. Accordingly the second node might be immediately adjacent to the provider edge node 16 such as node 20 or 38, or it might be further away from the provider edge node 16 such as any of the nodes 12, 14, 18, 30, 32, 34, 36. The crawler program 48 then moves to the second node by following the hyperlink. In this manner the crawler program 48 will eventually send network management information about all of the nodes 12, 14, 16, 18, 20, 30, 32, 34, 36, 38 back to the network manager apparatus 42 in the form of data packets 49. Whereas the crawler program 48 is sent by the provider edge node 16 it will be understood that any node 12, 14, 16, 18, 20, 30, 32, 34, 36, 38, 40 in the network 10 may send the crawler program 48.

In one arrangement the provider edge node 16 is a parent node of a Local Area Network (LAN) comprising a plurality of nodes, for example, five nodes. In this arrangement the crawler program 48 only visits the five nodes of the LAN. The crawler program 48 may also be limited by an operational constraint such as not crawling the LAN during business hours.

It will be appreciated that the hyperlink identified from the nodes 36 or 40 represents the identity of another node or device and may be a resource identifier such as an internet address, an Internet Protocol address, a Media Access Control (MAC) address, a Uniform Resource Locator (URL), an Extensible Resource Identifier (XRI), or other network identity.

The crawler programs 46, 48 are computer programs which are mobile agents that migrate through the network 10 and operate to interrogate the nodes 12, 14, 16, 18, 20, 30, 32, 34, 36, 38 of the network 10. The arrangement of the crawler programs 46, 48 being operable to hop from one node to another node by following hyperlinks avoids the need for a specific discovery module function in the network manager apparatus 42.

The crawler programs 46, 48 may be periodically sent into the network 10 to capture information about the network that may be important for network management purposes. It will be understood that the crawler programs 46, 48 are relatively small software programs which operate as agents to collect information in an autonomous manner once they have been sent into the network 10. In particular the crawler programs 46, 48 look for two types of information which are information about the node itself, such as the bit rate of a particular interface, and any pointers towards neighbouring nodes, such as hyperlinks.

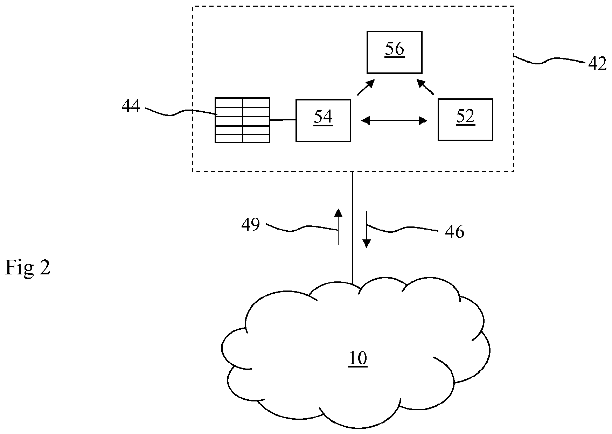

Figure 2 shows a diagram of modules for the network manager apparatus 42 shown in Figure 1 according to an embodiment of the invention. In Figure 2 like features to the arrangements of Figure 1 are shown with like reference numerals. In Figure 2 the network manager apparatus 42 includes a processor 52, a registry device 54, a crawler manager 56 and the database 44. The network manager apparatus 42 is in communication with the network 10 and is operable to send at least one crawler program 46 into the network and receive network management information in the form of the at least one data packet 49. The network manager apparatus 42 operates to determine the topology of the network 10, and may also operate to implement any operations, administration, maintenance and configuration traffic required for network management purposes.

The crawler manager 56 is responsible for initiating the launching of the crawler program 46 into the network 10. The crawler manager 56 also determines when and how often the crawler program 46 is to be launched into the network. In one embodiment the crawler program 46 is launched periodically into the network 10, for example every few seconds or minutes. Since the database 44 is a central place in the network 10 with information about the capabilities of all nodes 12, 14, 16, 18, 20, 30, 32, 34, 36, 38 it is important to make sure that the information in the database 44 is kept up to date. Sending frequent crawler programs 46 into the network 10 on a periodic basis has the advantage of maintaining up to date information in the database 44.

The crawler manager 56 may also be operable to set a survival time for each crawler program 46 once it has been sent into the network. The survival time is a period of time for which each crawler program is active. After the survival time the crawler program 46 ceases to operate. Such a survival time has the advantage that the crawler programs 46, 48 are terminated after being launched into the network 10. The survival time provides some control over the crawler program 46 after it has been sent into the network 10, and also provides a degree of control so that the crawler program 46 does not operate indefinitely.

The registry device 54 operates to receive the management information about the network 10 and record it in the database 44. The registry device 54 may also receive queries from crawler programs 46, 48 already in the network in relation to nodes that have been encountered. Overall control of the interactions between the registry device 54 and the crawler manager 56 is performed by the processor 52.

It will be appreciated that whereas the modules for the network manager apparatus 42 are shown to be located in the same apparatus, one or more of the modules may be located away from the network manager apparatus 42 such as in another node of the network. In such an arrangement the network manager apparatus 42 would be a distributed apparatus. In another embodiment the modules of the network manager apparatus 42 are implemented as software that may reside in a single node or in more than one node.

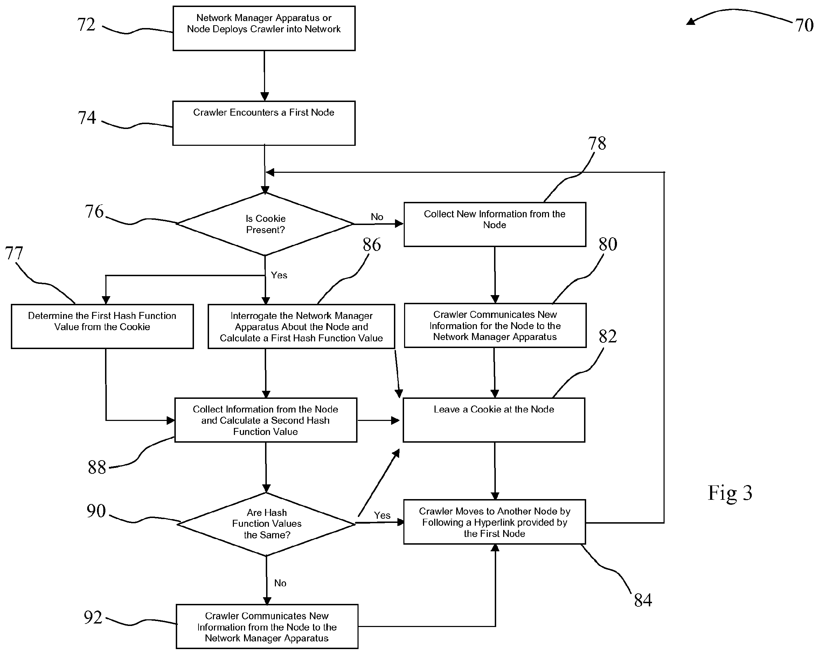

Figure 3 shows a flow diagram illustrating a method according to an embodiment of the invention, generally designated 70. The method 70 is performed by the modules of the network manager apparatus 42 shown in Figures 1 and 2, and relates to a method of discovering a node in the communications network 10 for network management purposes. In Figure 3 the method includes deploying the crawler program 46, 48 into the network 10 as shown at 72. Such deployment may be performed by the network manager apparatus 42 or by another node, such as the provider edge node 16. The crawler program 46, 48 then encounters a first node, as shown at 74, which may be node 36 or 40. The crawler program 46, 48 then determines whether it has previously visited the first node 36, 40 by looking for a cookie in the first node 36, 40 as shown at 76. It will be understood that the cookie is an item of data which serves as an identification marker to show whether the first node 36, 40 has been previously visited by the crawler program 46, 48. The use of cookies is required to be supported by the nodes 12, 14, 16, 18, 20, 30, 32, 34, 36, 38, 40 through an Application Programming Interface (API) that would allow reading and writing of the cookie. If the cookie is not present the crawler program 46, 48 collects new network management information from the first node 36, 40 as shown at 78. The crawler program 46, 48 then communicates the new network management information to the network manager apparatus 42 as shown at 80. Such communication may be in the form of one or more data packets 49. The crawler program 46, 48 then leaves a cookie at the first node 36, 40 to indicate that it has already visited and collected network management data from it, as shown at 82. The crawler program 46, 48 then moves to another node in the network 10 by following a hyperlink provided by the first node 36, 40, as shown at 84. The hyperlink would typically be stored in a memory of the first node 36, 40. It will be appreciated that the hyperlink represents an identity of another node or device and may be a resource identifier such as an internet address, an Internet Protocol address, a Media Access Control (MAC) address, a Uniform Resource Locator (URL), an Extensible Resource Identifier (XRI), or other network identity.

After step 76, if the crawler program 46, 48 determines that it has previously visited the first node 36, 40 by finding a cookie, the crawler program 46 interrogates the network manager apparatus 42 about the first node 36, 40 to determine the existing network management information about it and then calculates a first hash function value for the existing network management information as shown at 86. The crawler program 46, 48 then collects network management information from the first node 36, 40 and calculates a second hash function value as shown at 88 from this newly collects network management information using the same hash function. The first and second hash function values may be calculated using cryptographic hash functions such as a Message-Digest algorithm 5 (MD5) or a Secure Hash Algorithm (SHA-1). The method then continues at 90 to determine if the first and second hash function values are the same. If the first and second hash function values differ, the crawler program 46, 48 concludes that there are changes in the network management information. Calculating the first and second hash function values has the advantage of providing a well-defined way of converting a large amount of network management information into a single number or datum for easy comparison.

In an alternative embodiment after step 86, 88, or 90, the crawler program 46, 48 leaves a cookie at the first node 36, 40, as shown at 82, whereby the cookie includes the first hash function value of the existing network management information that was calculated at 86. This arrangement has the advantage that the first hash function value is readily available to the crawler program 46, 48 when it next visits the first node 36, 40. This avoids the need for the crawler program 34, 40 to interrogate the network manager apparatus 42 to determine the existing network management information and calculate the first hash function value as shown at 86. In order to determine if the network management information changed the crawler program 46 calculates the second hash function value, as described in the previous embodiment, and compares it with the first hash function value found in the cookie. The crawler program 46, 48 then moves to another node in the network 10 by following a hyperlink provided by the first node 36, 40, as shown at 84. After step 84 the method then returns to step 76 where the crawler program 46, 48 determines if the node identified by the hyperlink has been previously visited by looking for a cookie. If there is a cookie present and where the first hash function value has been previously stored within the cookie, the method then continues to determine the first hash function value from the cookie, as shown at 77.

If the first and second hash function values are the same it means that the network management information did not change since the last visit of a crawler program 46, 48 in the first node and the crawler program 46, 48 then moves to another node in the network 10 by following a hyperlink provided by the first node 36, 40, as shown at 84. If the first and second hash function values are not the same the crawler program communicates the new network management information for the first node 36, 40 to the network manager apparatus 42, as shown at 92. Such new network management information may be sent in the form of at least one data packet 49. The crawler program 46, 48 then moves to another node in the network 10 by following a hyperlink provided by the first node 36, 40, as shown at 84. Determining whether a change has occurred and only sending network management information if a change has occurred may significantly reduce the bandwidth needed for transmitting information throughout the network.

After step 84 the method then returns to step 76 where the crawler program 46, 48 determines if the node identified by the hyperlink has been previously visited by a crawler program, by looking for a cookie. The method then completes steps 77, 78, 80, 82, 84, 86, 88, 90, 92 as appropriate.

In this manner the method determines if the network management information for the first node 36, 40 stored in the database 44 is up to date. Furthermore the collection of information by the crawler program 46, 48 is optimised by not collecting information if it has not been changed since the first node 36, 40 was last visited. In effect the method collects information from the nodes in the network 10 using the crawler programs 46, 48 and synchronises the information in the database 44 with the collected information. For efficiency reasons, the information about a particular node may be partitioned into a plurality of blocks and the hash value may be calculated on each of the blocks independently. This arrangement allows the identification of a subset of information that contains changes. It further allows the exclusion of the other blocks of information from being transferred to the manager apparatus 42.

The calculation of the first and second hash function values and the reading and writing of cookies is performed by part of the code of the crawler programs 46, 48. Each node 12, 14, 16, 18, 20, 30, 32, 34, 36, 38, 40 may operate a sandbox environment where the crawler programs 46, 48 can run securely under the control of software local to the node. The sandbox environment provides a highly controlled set of resources in which the crawler programs 46, 48 are allowed to run. The crawler programs 46, 48 are only allowed to access any network management information or functional descriptions of the nodes 12, 14, 16, 18, 20, 30, 32, 34, 36, 38, 40 according to a particular level of authorisation with a limited access to other resources. A further option requires each crawler program 46, 48 to be signed by a trusted security authority or to download a security certificate on request from a trusted security authority. Such arrangements have the advantage of reducing security risks. A further way to reduce security risks is to use a proprietary cookie with a data structure that contains a signature unique to a particular organisation. The proprietary cookie could be analysed by the crawler program 46, 48 to determine whether it has been modified by an unauthorised crawler program. With such a situation the security signature might be encrypted and the unauthorised crawler program might not employ the correct security key to decrypt any information contained in the security signature.

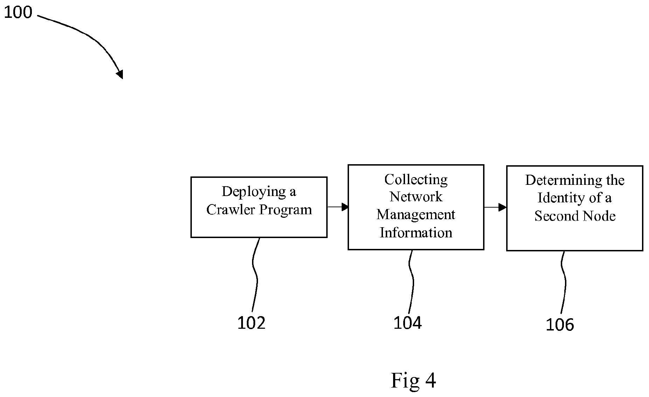

Figure 4 shows a flow diagram illustrating a method according to an embodiment of the invention, generally designated 100. The method 100 is performed by the modules of the network manager apparatus 42 shown in Figures 1 and 2, and relates to a method of discovering a node in the communications network 10 for network management purposes. In Figure 4 the method includes deploying the crawler program 46, 48, as shown at 102. The crawler program encountering a first node 36, 40 of the network. The method includes collecting network management information from the first node 36, 40 using the crawler program 46, 48, as shown at 104. The method includes determining an identity of a second node 18, 20 in communication with the first node 36, 40 from the network management information using the first crawler program 46, 48, as shown at 106.

With the above embodiments each node 12, 14, 16, 18, 20, 30, 32, 34, 36, 38, 40 in the network 10 may run an acceptance service for the crawler programs 46, 48 to allow them to connect and obtain information. The acceptance service and the crawler program 46, 48 operate to agree a version of the communication protocol and data structures to be read. The acceptance service on a particular node may provide the hyperlinks pointing to topological neighbours that could be visited by the crawler program 46, 48.

Whereas simple examples of implementing the method 70, 100 have been described herein with reference to Figures 1 - 4, it will be understood that a real life network would be much more complex involving many more customer nodes 30, 32, 34, 36, 38. Such customer nodes 30, 32, 34, 36, 38 might be frequently added or taken away from the network 10 when customers subscribe to the network 10 or switch to another network. Accordingly, with the embodiments of the invention described above the time and effort required to manage the operation and configuration of such a real life network would be even further reduced. Overall, the network operator is provided with a much more efficient tool for handling changes within the network 10 because the required interaction with the network 10 by the network operator is reduced when compared to the prior art techniques. The embodiments of the invention described above may be thought of as a way to discover changes and automatically include them into the topology of the network 10. This may lead to a reduced operational expenditure for the network 10 due to a simplified management. It will be appreciated that the embodiments described herein aim to provide an approach to management of the network 10 which is substantially automated so that network management data is not required to be manually collected and input to the database 44 by a network operator. Furthermore, the path that the crawler programs 46, 48 follow does not need to be predetermined by the network operator. The methods 70, 100 are suitable for relatively slow network changes such as the addition of new nodes to the network 10 by a user, but may also be used in combination with other event-triggered actions for urgent network reconfigurations in the event of network failures.

In the above described embodiments the resource identifier may also point towards a network function program in another node 12, 14, 16, 18, 20, 30, 32, 34, 36, 38, 40 of the network 10. Such a network function program is a software program running on a particular node 12, 14, 16, 18, 20, 30, 32, 34, 36, 38, 40 of the network 10 that may relate to a particular parameter of the node 12, 14, 16, 18, 20, 30, 32, 34, 36, 38, 40 on which it is running. The particular parameter might be, for example, an operation of an interface of the node, or a QOS parameter, or an optimisation of a network link 22, 23, 24, 26, 28, 41. Each network function program has its own identity which is associated with the node 12, 14, 16, 18, 20, 30, 32, 34, 36, 38, 40 on which it is operating. Each node 12, 14, 16, 18, 20, 30, 32, 34, 36, 38, 40 of the network 10 might run more than one network function program relating to a particular aspect of the node 12, 14, 16, 18, 20, 30, 32, 34, 36, 38, 40. The resource identifier, such as the hyperlink, allows a particular network function program to point towards a corresponding network function program handling the same parameter on another node 12, 14, 16, 18, 20, 30, 32, 34, 36, 38, 40. Such an arrangement allows the crawler program 46, 48 to find the required network management information in an efficient manner.

The above embodiments might also be appropriate in a multi-domain scenario, for example, when three LANs are associated in an arrangement LAN1 + LAN2 + LAN3. In this scenario LAN1 is operated by provider A, LAN2 is operated by provider B, and LAN3 is operated by provider C. Each of these domains may have a gateway at the interconnection points between them that filter incoming requests, processes queries within its own domain, and return the results, which might cause problems for the prior art ways of discovering nodes. With the embodiments of the invention, the crawler programs 46, 48 are only allowed to review network management information that is appropriate to its level of authorisation. Each domain LAN1, LAN2, LAN3 may host multiple hyperlinks for each network function program supported by a particular node within each domain LAN1, LAN2, LAN3. With such an arrangement an authorisation, such as a security certificate, is required by a particular node for accessing the network management information via each of the hyperlinks. Alternately, the gateways may perform an authorisation check and allow only certain crawler programs 46, 48 to access relevant resource identifiers if they have the required authorisation. Accordingly, access can be granted or denied in situations where the security credentials are not sufficient.

The above embodiments permit many tens or hundreds of crawler programs 46, 48 to be operating in the network 10 at any given time. This may allow the network 10 to be investigated more quickly than prior art arrangements. In the embodiments described herein, two crawler programs 46, 48 may encounter each other within the network 10 and may exchange information between each other. The information might relate to at least one node that has been previously visited by one of the crawler programs 46, 48. This has the advantage that one crawler program would not waste time visiting a node that had recently been visited by the other crawler program. The two crawler programs 46, 48 may also synchronise or merge part of the network management information directly with each other in the situation where they meet at nodes that are adjacent to each other. In this scenario one crawler program might terminate so that only the other crawler program continues operating.

Optionally the above embodiments include an optimization module to control the frequency of launching the crawler programs 46, 48 in different parts of the network, such as a particular domain or LAN. Certain parts of the network 10 might need to be crawled more often than others due to the nature of any information specific to a particular domain or LAN. The optimisation module may work in an adaptive way and may adjust the frequency of sending the crawler programs 46, 48 into the network 10 taking into account the frequency of the changes that are observed in the network 10.

A further advantage of the above embodiments is that they are based on a distributed information collecting technique whereby the crawler programs 46, 48 gather network management information in the network 10 and send it to the network manager apparatus 42. This avoids the need for the network manager apparatus to be told about the existence of the nodes 12, 14, 16, 18, 20, 30, 32, 34, 36, 38, 40 by a human operator who does then not need to calculate a predefined path for the crawler program 46, 48 to follow. Overall this provides a simplified approach to network management.

Whereas the use of mobile crawler programs 46, 48 has been described above which hop from node to node, in an alternative embodiment the crawler programs 46, 48 operate from a central location such as the network manager apparatus 42 or the provider edge node 16. With such a centralised arrangement, when the resource identifier has been determined from the first node 36, 40, such as a hyperlink identifying a second node, this information is sent back to the network manager apparatus 42 or the provider edge node 16. A second crawler program is then sent to the second node from the network manager apparatus 42 or the provider edge node 16. With this arrangement the registry device 54 may calculate the hash function value either on request from the crawler program 46, 48 or automatically every time a change in the network management information is determined.

It will be appreciated that whereas the above embodiments have been generally described for a fixed line (copper line or optical fibre) communications network, they could equally be implemented in a mobile (radio) communications network. In such a mobile communications network the newly deployed customer node 36 might be a home eNodeB. The user or the network operator would then connect the home eNodeB to the network 10 by associating it to a nearby Base Transceiver Station (BTS). The mobile communications device would then be visited by the crawler 46, 48 as described above to connect it to the network 10.

## Claims

1. A method (70, 100) of discovering a node in a communications network (10) for network management, including:
deploying (72, 102) a first crawler program (46, 48) in the network, the first crawler program encountering a first node (36, 40) of the network; and
collecting (78, 88, 104) network management information from the first node using the first crawler program (46, 48) by:
determining (84, 106) an identity of a second node (18, 20) in communication with the first node (36, 40) from the network management information using the first crawler program (46, 48), the method further including deploying a second crawler program (46, 48) in the network (10), wherein the first crawler program and the second crawler program (46, 48) are configured to exchange information if they encounter each other in the network (10), said information relating to at least one node that has been previously visited by one of the crawler programs (46, 48).

2. A method according to claim 1, and further including:
(a) determining (76) whether the first crawler program (46, 48) has previously visited the first node (36, 40).

3. A method according to claim 2, and further including after step (a):
(b) if the first crawler program (46, 48) has not previously visited the first node (36, 40), then communicating (80) the network management information about the first node (36, 40) to a network manager apparatus (42).

4. A method according to claim 3, and further including after step (b):
(c) leaving an identification marker (82) at the first node (36, 40) to indicate that it has been visited by the first crawler program (46, 48).

5. A method according to claim 2, and further including after step (a):
(d) if the first crawler program (46, 48) has previously visited the first node (36, 40) then determining (90) if the network management information about the first node (36, 40) has changed.

6. A method according to claim 5, wherein said determining if the network management information about the first node (36, 40) has changed further includes:
calculating (86) a first value from previously stored network management information about the first node (36, 40);
calculating (88) a second value from new network management information about the node (36, 40); and
comparing (90) the first and second values to determine if they are different.

7. A method according to claim 6, and further including storing the first value at the first node (36, 40).

8. A method according to claim 7, and further including using (77) said stored first value at the first node to determine if the network management information about the first node (36, 40) has changed.

9. A method according to any of claims 5 - 8, and further including after step (d):
(e) if the network management information about the first node (36, 40) has changed, then communicating (92) the new network management information to a network manager apparatus (42).

10. A network manager apparatus (42) for discovering a node in a communications network (10), the network manager apparatus having a processor (39) adapted to:
deploy (72, 102) a first crawler program (46, 48) in the network, the first crawler program for encountering a first node (36, 40) of the network; and
collect (78, 88, 104) network management information from the first node using the crawler program (46, 48), wherein the processor (39) is adapted to determine (84, 106) an identity of a second node (18, 20) in communication with the first node (36, 40) from the network management information using the first crawler program (46, 48);
wherein the processor (39) is further adapted to deploy a second crawler program (46, 48) in the network (10), wherein the first crawler program and the second crawler program (46, 48) are configured to exchange information if they encounter each other in the network (10), said information relating to at least one node that has been previously visited by one of the crawler programs (46, 48).

11. A network manager apparatus (42) according to claim 10 adapted to operate according to any of claims 1 - 9.

12. A computer program product operable to control a network manager apparatus (42) for discovering a node in a communications network (10), the network manager apparatus having a processor (39) adapted to:
deploy (72, 102) a first crawler program (46, 48) in the network, the first crawler program for encountering a first node (36, 40) of the network; and
collect (78, 88, 104) network management information from the first node using the crawler program (46, 48),
wherein the processor is adapted to determine (84, 106) an identity of a second node (18, 20) in communication with the first node (36, 40) from the network management information using the first crawler program (46, 48);
wherein the processor (39) is further adapted to deploy a second crawler program (46, 48) in the network (10), wherein the first crawler program and the second crawler program (46, 48) are configured to exchange information if they encounter each other in the network (10), said information relating to at least one node that has been previously visited by one of the crawler programs (46, 48).

## Patentansprüche

1. Verfahren (70, 100) zum Auffinden eines Knotens in einem Kommunikationsnetz (10) zur Netzverwaltung, beinhaltend:
Einsetzen (72, 102) eines ersten Crawler-Programms (46, 48) in dem Netz, wobei das erste Crawler-Programm einen ersten Knoten (36, 40) des Netzes vorfindet; und
Sammeln (78, 88, 104) von Netzverwaltungsinformationen von dem ersten Knoten unter Verwendung des ersten Crawler-Programms (46, 48) durch:
Bestimmen (84, 106) einer Identität eines zweiten Knotens (18, 20) in Kommunikation mit dem ersten Knoten (36, 40) aus den Netzverwaltungsinformationen unter Verwendung des ersten Crawler-Programms (46, 48), wobei das Verfahren ferner ein Einsetzen eines zweiten Crawler-Programms (46, 48) in dem Netz (10) beinhaltet, wobei das erste Crawler-Programm und das zweite Crawler-Programm (46, 48) dazu konfiguriert sind, Informationen auszutauschen, wenn sie sich gegenseitig im Netz (10) vorfinden, wobei die Informationen zu zumindest einem Knoten gehören, der zuvor durch eines der Crawler-Programme (46, 48) besucht wurde.

2. Verfahren nach Anspruch 1, ferner Folgendes beinhaltend:
(a) Bestimmen (76), ob das erste Crawler-Programm (46, 48) zuvor den ersten Knoten (36, 40) besucht hat.

3. Verfahren nach Anspruch 2, ferner Folgendes nach Schritt (a) beinhaltend:
(b) wenn das erste Crawler-Programm (46, 48) zuvor nicht den ersten Knoten (36, 40) besucht hat, dann Kommunizieren (80) der Netzverwaltungsinformationen über den ersten Knoten (36, 40) an eine Netzverwaltervorrichtung (42).

4. Verfahren nach Anspruch 3, ferner Folgendes nach Schritt (b) beinhaltend:
(c) Hinterlassen einer Identifikationsmarkierung (82) an dem ersten Knoten (36, 40), um anzugeben, dass er durch das erste Crawler-Programm (46, 48) besucht wurde.

5. Verfahren nach Anspruch 2, ferner Folgendes nach Schritt (a) beinhaltend:
(b) wenn das erste Crawler-Programm (46, 48) zuvor den ersten Knoten (36, 40) besucht hat, dann Bestimmen (90), ob sich die Netzverwaltungsinformationen über den ersten Knoten (36, 40) geändert haben.

6. Verfahren nach Anspruch 5, wobei das Bestimmen, ob sich die Netzverwaltungsinformationen über den ersten Knoten (36, 40) geändert haben, ferner Folgendes beinhaltet:
Berechnen (86) eines ersten Werts aus zuvor gespeicherten Netzverwaltungsinformationen über den ersten Knoten (36, 40);
Berechnen (88) eines zweiten Werts aus neuen Netzverwaltungsinformationen über den Knoten (36, 40); und
Vergleichen (90) des ersten und zweiten Werts, um zu bestimmen, ob sich diese unterscheiden.

7. Verfahren nach Anspruch 6, ferner beinhaltend ein Speichern des ersten Werts an dem ersten Knoten (36, 40).

8. Verfahren nach Anspruch 7, ferner beinhaltend ein Verwenden (77) des gespeicherten ersten Werts an dem ersten Knoten, um zu bestimmen, ob sich die Netzverwaltungsinformationen über den ersten Knoten (36, 40) geändert haben.

9. Verfahren nach einem der Ansprüche 5-8, ferner Folgendes nach Schritt (d) beinhaltend:
(e) wenn sich die Netzverwaltungsinformationen über den ersten Knoten (36, 40) geändert haben, dann Kommunizieren (92) der neuen Netzverwaltungsinformationen an eine Netzverwaltervorrichtung (42).

10. Netzverwaltervorrichtung (42) zum Auffinden eines Knotens in einem Kommunikationsnetz (10), wobei die Netzverwaltervorrichtung einen Prozessor (39) aufweist, der für Folgendes angepasst ist:
ein erstes Crawler-Programm (46, 48) in dem Netz einzusetzen (72, 102), wobei das erste Crawler-Programm zum Vorfinden eines ersten Knotens (36, 40) des Netzes dient; und
Netzverwaltungsinformationen von dem ersten Knoten unter Verwendung des Crawler-Programms (46, 48) zu sammeln (78, 88, 104), wobei der Prozessor (39) dazu angepasst ist, eine Identität eines zweiten Knotens (18, 20) in Kommunikation mit dem ersten Knoten (36, 40) aus den Netzverwaltungsinformationen unter Verwendung des ersten Crawler-Programms (46, 48) zu bestimmen (84, 106);
wobei der Prozessor (39) ferner dazu angepasst ist, ein zweites Crawler-Programm (46, 48) in dem Netz (10) einzusetzen, wobei das erste Crawler-Programm und das zweite Crawler-Programm (46, 48) dazu konfiguriert sind, Informationen auszutauschen, wenn sie sich gegenseitig im Netz (10) vorfinden, wobei die Informationen zu zumindest einem Knoten gehören, der zuvor durch eines der Crawler-Programme (46, 48) besucht wurde.

11. Netzverwaltervorrichtung (42) nach Anspruch 10, dazu angepasst, nach einem der Ansprüche 1-9 zu arbeiten.

12. Computerprogrammprodukt, das dazu betreibbar ist, eine Netzverwaltervorrichtung (42) zum Auffinden eines Knotens in einem Kommunikationsnetz (10) zu steuern, wobei die Netzverwaltervorrichtung einen Prozessor (39) aufweist, der für Folgendes angepasst ist:
ein erstes Crawler-Programm (46, 48) in dem Netz einzusetzen (72, 102), wobei das erste Crawler-Programm zum Vorfinden eines ersten Knotens (36, 40) des Netzes dient; und
Netzverwaltungsinformationen von dem ersten Knoten unter Verwendung des Crawler-Programms (46, 48) zu sammeln (78, 88, 104),
wobei der Prozessor dazu angepasst ist, eine Identität eines zweiten Knotens (18, 20) in Kommunikation mit dem ersten Knoten (36, 40) aus den Netzverwaltungsinformationen unter Verwendung des ersten Crawler-Programms (46, 48) zu bestimmen (84, 106);
wobei der Prozessor (39) ferner dazu angepasst ist, ein zweites Crawler-Programm (46, 48) in dem Netz (10) einzusetzen, wobei das erste Crawler-Programm und das zweite Crawler-Programm (46, 48) dazu konfiguriert sind, Informationen auszutauschen, wenn sie sich gegenseitig im Netz (10) vorfinden, wobei die Informationen zu zumindest einem Knoten gehören, der zuvor durch eines der Crawler-Programme (46, 48) besucht wurde.

## Revendications

1. Procédé (70, 100) de découverte d'un noeud dans un réseau de communication (10) aux fins de gestion de réseau, comprenant :
le déploiement (72, 102) d'un premier programme collecteur (46, 48) dans le réseau, le premier programme collecteur rencontrant un premier noeud (36, 40) du réseau ; et
la collecte (78, 88, 104) d'informations de gestion de réseau depuis le premier noeud à l'aide du premier programme collecteur (46, 48) par :
la détermination (84, 106) d'une identité d'un second noeud (18, 20) en communication avec le premier noeud (36, 40) à partir des informations de gestion de réseau à l'aide du premier programme collecteur (46, 48), le procédé comprenant en outre le déploiement d'un second programme collecteur (46, 48) dans le réseau (10), dans lequel le premier programme collecteur et le second programme collecteur (46, 48) sont configurés pour échanger des informations s'ils se rencontrent l'un l'autre dans le réseau (10), lesdites informations se rapportant au moins à un noeud qui a été visité au préalable par un des programmes collecteurs (46, 48).

2. Procédé selon la revendication 1, et comprenant en outre :
(a) la détermination (76) si le premier programme collecteur (46, 48) a visité au préalable le premier noeud (36, 40).

3. Procédé selon la revendication 2, et comprenant en outre après l'étape (a) :
(b) si le premier programme collecteur (46, 48) n'a pas visité au préalable le premier noeud (36, 40), alors la communication (80) des informations de gestion de réseau au sujet du premier noeud (36, 40) à un appareil gestionnaire de réseau (42).

4. Procédé selon la revendication 3, et comprenant en outre après l'étape (b) :
(c) le fait de laisser un marqueur d'identification (82) au niveau du premier noeud (36, 40) pour indiquer qu'il a été visité par le premier programme collecteur (46, 48).

5. Procédé selon la revendication 2, et comprenant en outre après l'étape (a) :
(d) si le premier programme collecteur (46, 48) a visité au préalable le premier noeud (36, 40), alors le fait de déterminer (90) si les informations de gestion de réseau au sujet du premier noeud (36, 40) ont changé.

6. Procédé selon la revendication 5, dans lequel ledit fait de déterminer si les informations de gestion de réseau au sujet du premier noeud (36, 40) ont changé, comprend en outre :
le calcul (86) d'une première valeur à partir d'informations de gestion de réseau, stockées au préalable, au sujet du premier noeud (36, 40) ;
le calcul (88) d'une seconde valeur à partir de nouvelles informations de gestion de réseau au sujet du noeud (36, 40) ; et
la comparaison (90) des première et seconde valeurs pour déterminer si elles sont différentes.

7. Procédé selon la revendication 6, et comprenant en outre le stockage de la première valeur au niveau du premier noeud (36, 40).

8. Procédé selon la revendication 7, et comprenant en outre l'utilisation (77) de ladite première valeur stockée au niveau du premier noeud pour déterminer si les informations de gestion de réseau au sujet du noeud (36, 40) ont changé.

9. Procédé selon l'une quelconque des revendications 5 à 8, et comprenant en outre après l'étape (d) :
(e) si les informations de gestion de réseau au sujet du premier noeud (36, 40) ont changé, alors la communication (92) des nouvelles informations de gestion de réseau à un appareil gestionnaire de réseau (42).

10. Appareil gestionnaire de réseau (42) pour découvrir un noeud dans un réseau de communication (10), l'appareil gestionnaire de réseau ayant un processeur (39) adapté pour :
déployer (72, 102) un premier programme collecteur (46, 48) dans le réseau, le premier programme collecteur pour rencontrer un premier noeud (36, 40) du réseau ; et
collecter (78, 88, 104) des informations de gestion de réseau depuis le premier noeud à l'aide du programme collecteur (46, 48), dans lequel le processeur (39) est adapté pour déterminer (84, 106) une identité d'un second noeud (18, 20) en communication avec le premier noeud (36, 40) à partir des informations de gestion de réseau à l'aide du premier programme collecteur (46, 48) ;
dans lequel le processeur (39) est en outre adapté pour déployer un second programme collecteur (46, 48) dans le réseau (10), dans lequel le premier programme collecteur et le second programme collecteur (46, 48) sont configurés pour échanger des informations s'ils se rencontrent l'un l'autre dans le réseau (10), lesdites informations se rapportant à au moins un noeud qui a été visité au préalable par un des programmes collecteurs (46, 48).

11. Appareil gestionnaire de réseau (42) selon la revendication 10, adapté pour fonctionner selon l'une quelconque des revendications 1 à 9.

12. Produit-programme d'ordinateur utilisable pour commander un appareil gestionnaire de réseau (42) pour découvrir un noeud dans un réseau de communication (10), l'appareil gestionnaire de réseau ayant un processeur (39) adapté pour :
déployer (72, 102) un premier programme collecteur (46, 48) dans le réseau, le premier programme collecteur pour rencontrer dans un premier noeud (36, 40) du réseau ; et
collecter (78, 88, 104) des informations de gestion de réseau depuis le premier noeud à l'aide du programme collecteur (46, 48),
dans lequel le processeur est adapté pour déterminer (84, 106) une identité d'un second noeud (18, 20) en communication avec le premier noeud (36, 40) à partir des informations de gestion de réseau à l'aide du premier programme collecteur (46, 48) ;
dans lequel le processeur (39) est en outre adapté pour déployer un second programme collecteur (46, 48) dans le réseau (10), dans lequel le premier programme collecteur et le second programme collecteur (46, 48) sont configurés pour échanger des informations s'ils se rencontrent l'un l'autre dans le réseau (10), lesdites informations se rapportant à au moins un noeud qui a été visité au préalable par un des programmes collecteurs (46, 48).
